# EUROPEAN PATENT APPLICATION

(11) **EP 0 941 776 A1**
(43) Date of publication of application: **15.09.1999**
(21) Application number: 98301915.9
(22) Date of filing: 13.03.1998
(51) Int. Cl.: B08B 9/02, B08B 9/04, F28G 9/00

(54) **Air feed passage cleaning apparatus**

(71) Applicant: Akazawa, Akira, Matsubara, Osaka (JP); Akazawa, Yasumasa, Matsubara, Osaka (JP)
(72) Inventor: Akazawa, Akira, Matsubara, Osaka (JP); Akazawa, Yasumasa, Matsubara, Osaka (JP)
(74) Representative: Murgatroyd, Susan Elizabeth

(57) **Abstract**

The present invention relates to an air feed passage cleaning apparatus for cleaning the air conditioning passage of an air conditioner (1) used in a building, ship, airplane, automobile, electric railcar or other indoor space, or air feed passage of various intake and exhaust ducts. The air conditioner (1) typically has an air suction port (3), air blow-out port (4), a fan (7) and a heat exchanger (9). The cleaning apparatus may comprise at least one solvent discharge means (11) for discharging solvent (a) in the air feed passage. Alternatively, the cleaning apparatus may comprise means for moving a cleaning and wiping element loaded in the air feed passage toward a specific blow-out port. The dirt sticking to the air feed passage and heat exchanger (9) can thus be cleaned and removed efficiently, so that sanitary environments can be obtained.

## Description

The present invention relates to an air feed passage cleaning apparatus for cleaning the air conditioning passage of the air conditioner for conditioning the air in a building, ship, airplane, automobile, electric railcar or other indoor space, or an air feed passage of various intake and exhaust ducts.

Conventionally, an air conditioner incorporates, in its housing, a heat exchanger acting as an evaporator in cooling operation and as a condenser in heating operation, and in the process of heat exchange of indoor air containing dust, moisture, cigarette smoke and others from the air suction unit provided in the housing, the heat exchanger and the air feed passage are likely to be contaminated, and germs and molds are formed.

When air conditioning is operated in such a state, the indoor sanitation is spoiled, and the indoor environment may deteriorate due to offensive smells, and similar problems are known in the air feed passage of various intake and exhaust ducts.

It is hence a primary object of the invention to provide an air feed passage cleaning apparatus comprising at least one solvent discharge means in the air feed passage between an air suction section and an air blow-out section, and thereby to enable cleaning of the air feed passage thoroughly by the solvent discharged from the solvent discharge means, and thus improve the indoor environment.

It is another object of the invention to provide an air feed passage cleaning apparatus comprising solvent discharge means at the upstream side (windward side) of the heat exchanger, and thereby to enable cleaning effectively of the heat exchanger that is most heavily contaminated.

It is a further object of the invention to provide an air feed passage cleaning apparatus comprising feed means for feeding a cleaning solvent, together with pressurised air, to the heat exchanger from the blow-out port through the air feed passage, and thereby to enable cleaning of the air feed passage and heat exchanger effectively, and thus improve the indoor environment.

It is also an object of the invention to provide an air feed passage cleaning apparatus comprising the above feed means at a blow-out port at a position as distant as possible from the heat exchanger out of plural blow-out ports, and thereby to enable cleaning of nearly the entire region and the heat exchanger thoroughly even if the air feed passage is a long passage.

It is also an object of the invention to provide an air feed passage cleaning apparatus capable of cleaning and removing thoroughly and cleanly the dirt adhered to the inside of the air feed passage by the cleaning power of the cleaning solvent impregnated or bonded, for example, in the cleaning and wiping element, by moving the cleaning and wiping element provided in the air feed passage by moving means, so that sanitary environments may be obtained.

It is also an object of the invention to provide an air feed passage cleaning apparatus capable of applying an air pressure supplied from air feed means to the cleaning and wiping element provided in the air feed passage, moving the cleaning and wiping element at once to the blow-out port side, and thereby cleaning and removing the dirt in the air feed passage quickly in a short time.

It is also an object of the invention to provide an air feed passage cleaning apparatus capable of wiping and removing the contaminated portions in the air feed passage by the cleaning and wiping element, by manipulating the linear traction member linked to the cleaning and wiping element, and arbitrarily changing the wiping position by the cleaning and wiping element depending on the position and area of contamination.

The invention will now be described by way of examples with reference to the accompanying drawings in which:-
Fig. 1 is a sectional view showing an air feed passage cleaning apparatus of one embodiment of the invention.
Fig. 2 is a sectional view along line B-B in Fig. 1.
Fig. 3 is a magnified view of essential parts in Fig. 2.
Fig. 4 is a sectional view showing another embodiment of an air feed passage cleaning apparatus.
Fig. 5 is a sectional view showing a different embodiment of an air feed passage cleaning apparatus.
Fig. 6 is a sectional view showing another different embodiment of an air feed passage cleaning apparatus.
Fig. 7 is a sectional view showing another embodiment of receiving means mounting structure.
Fig. 8 is a sectional view showing a further different embodiment of an air feed passage cleaning apparatus.
Fig. 9 is a sectional view of essential parts along line C-C in Fig. 8.
Fig. 10 is an explanatory diagram when using foamy cleaning fluid.
Fig. 11 is a sectional view showing another different embodiment of an air feed passage cleaning apparatus.
Fig. 12 is a sectional view showing another different embodiment of an air feed passage cleaning apparatus.
Fig. 13 is a sectional view showing another different embodiment of an air feed passage cleaning apparatus.
Fig. 14 is a magnified view of essential parts in Fig. 13.
Fig. 15 is a sectional view showing another different embodiment of an air feed passage cleaning apparatus.
Fig. 16 is a sectional view showing another different embodiment of an air feed passage cleaning apparatus.
Fig. 17 is a sectional view showing another different embodiment of an air feed passage cleaning apparatus.
Fig. 18 is a sectional view showing a duct cleaning apparatus.
Fig. 19 is a sectional view showing another different embodiment of an air feed passage cleaning apparatus.
Fig. 20 is a sectional view showing the mounting state of a cleaning and wiping element and traction pipe.
Fig. 21 is a sectional view showing cleaning by traction wire and traction pipe.
Fig. 22 is a sectional view showing the mounting state of a traction wire and traction pipe.
Fig. 23 is a sectional view showing another different embodiment of an air feed passage cleaning apparatus.
Fig. 24 is a sectional view showing the mounting state of a cleaning and wiping element.
Fig. 25 is a sectional view showing cleaning by a tubular cleaning and wiping element.
Fig. 26 is a sectional view showing the mounting state of a tubular cleaning and wiping element.

Referring now to the drawings, embodiments of the invention are described in detail below.

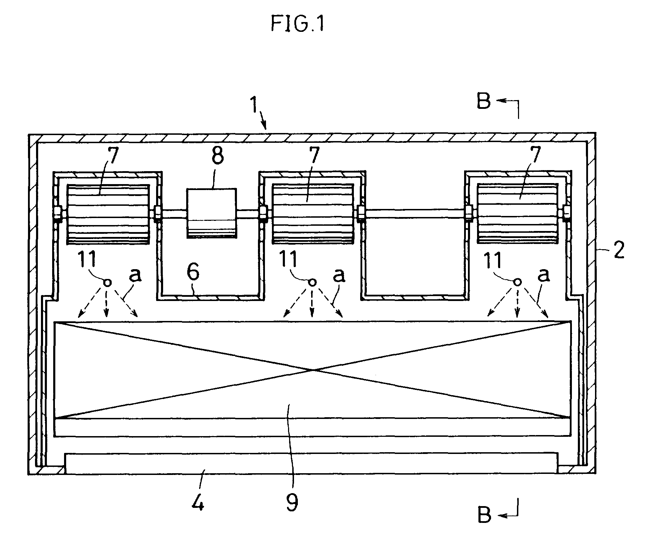

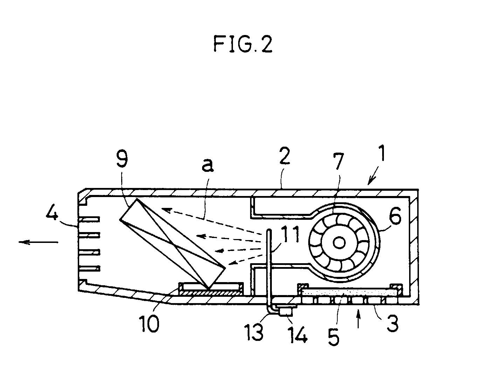

The drawings show the air feed passage cleaning apparatus, and in Fig. 1 and Fig. 2, an air conditioner 1 (showing a ceiling suspension type in Fig. 1 and Fig. 2) forms an air suction port 3 and air blow-out port 4 (hereinafter referred to merely as suction port 3 and blow-out port 4) at one side and other side of a housing 2, and a filter 5 is disposed inside of the suction port 3.

At the wind blowing side in the housing 2, plural fans 7 (drafting means) enclosed by a fan casing 6 are suspended, and it is constituted to drive the plural fans 7 by a single motor 8, and a heat exchanger 9 is disposed between the discharge side of the fans 7 and the blow-out port 4, and a drain pan 10 is disposed at its lower end. The heat exchanger 9 is connected to the refrigeration cycle, and it functions as an evaporator in cooling operation, and as a condenser in heating operation.

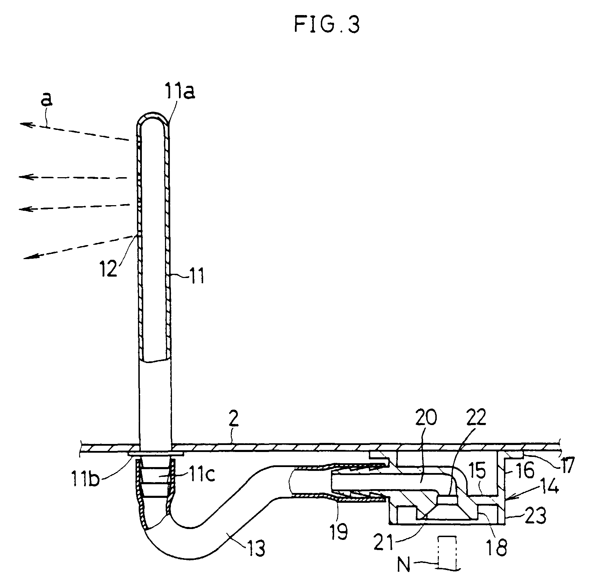

In thus constituted air conditioner 1, as an example of air feed passage between the suction port 3 and blow-out port 4, a nozzle 11 (solvent discharge means) is set up and fixed from the lower part of the housing 2 so that the solvent discharge portion (ejection port 12 in Fig. 3) may be positioned at the upstream side of the heat exchanger 9.

A total of three nozzles 11 are identical in structure, and a specific constitution is as shown in Fig. 3. That is, the nozzle 11 is a relatively slender cylindrical form closed at the end 11a, and at a position confronting the front side of the heat exchanger 9, plural ejection ports 12 for ejecting the solvent "a" (for example, cleaning solvent) are formed in the direction indicated by dotted line arrows in Fig. 1 to Fig. 3. If necessary, the ejection ports 12 may be formed at the fan 7 side of the nozzle 11.

At the base end side of the nozzle 11, there are flange 11b and a joint 11c, and the flange 11b is joined to the outer side of the housing 2 by proper means (adhesion, clip, bolt, etc.), while a leading end side of a rubber hose 13 (solvent feed route) is fitted and fixed to the joint 11c by its elastic tightening force. Instead of rubber hose 13, resin tube or metal pipe may be used.

At the same outer side of the housing 2 near the joint 11c of the nozzle 11, a receiving member 14 (receiving means) made of synthetic resin is fixed by proper means (adhesion, bolt, clip, double-sided adhesive tape).

The receiving member 14 partly forms a flange 17 through a ring-shaped spacer 16 on a principal plate 15 positioned in the middle, and a solvent passage 20 is formed between a guide 18 provided in the center of the principal plate 15 and a joint 19 projecting outward from a part of the outer circumference of the spacer 16.

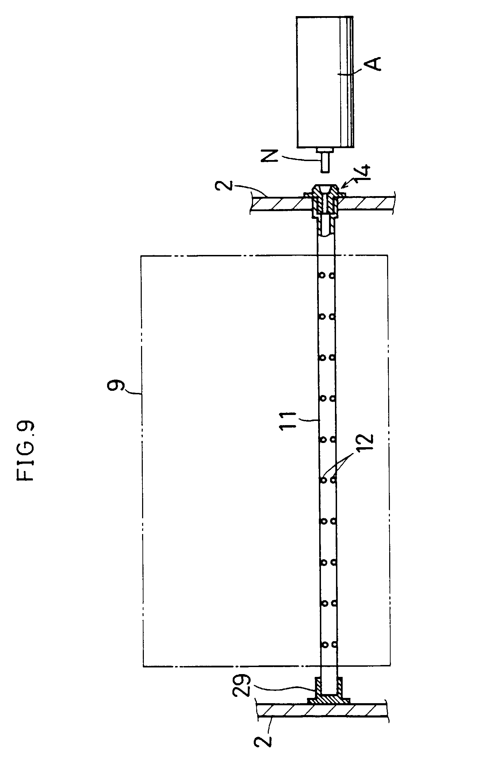

The guide 18 is intended to position the nozzle N of a filling container A (a gas-filled handy type solvent container, see Fig. 9) in an inserting form when feeding the solvent, and a taper 21 for nozzle guide having a larger diameter at the outer side and a smaller diameter at the inner side is formed in the guide 18. At the inner side of the taper 21, an annular step 22 for preventing excessive insertion of the nozzle N is formed. On a holder 23 formed integrally at the anti-spacer side in the principal plate 15, a lid member (not shown) may be supported detachably.

At the joint 19 of the receiving member 14, the base end side of the rubber hose 13 is fitted and fixed by its elastic tightening force, and the solvent passage 20 of the receiving member 14 is formed to communicate with the nozzle 11 through the rubber hose 13. In the three nozzles, meanwhile, independent rubber hoses 13 and receiving members 14 may be provided, or from one receiving member 14, the solvent "a" may be simultaneously fed into the three nozzles 11.

As the solvent "a", liquid cleaning agent, foamy cleaning liquid (water, phosphoric acid, Softanol 70, propylene glycol monoethyl ether MGF, and others blended properly), cleaning water, perfume, chemical, deodorant, antibacterial agent, and antifungal agent may be used alone or in mixture (compound).

Incidentally, the elements 11, 13, 14 shown in Fig. 3 may be handled as a kit, and these elements 11, 13, 14 may be attached later to the air conditioner 1, or may be integrally mounted preliminarily when manufacturing the air conditioner 1.

The operation of thus constituted air feed passage apparatus is explained below.

When cleaning the heat exchanger 9, the nozzle N of the filling container A is inserted into the solvent passage 20 guided by the taper 21 of the guide 18 in the receiving member 14, and the cleaning fluid is forced out from the nozzle N. The cleaning fluid flows into the nozzle 11 through the solvent passage 20 and rubber hose 13, and is ejected toward substantially the entire front region of the heat exchanger 9 from multiple ejection ports 12. Accordingly, substantially the entire surface of the fins of complicated shape (not shown) of the heat exchanger 9 can be cleaned sufficiently. After the cleaning process, the fluid is discharged through a drain line from a drain pan 10 immediately beneath the heat exchanger 9. If necessary, the fluid after the cleaning process may be discharged from the blow-out port 4, and this fluid may be received in proper means.

Herein, when the fan 7 is driven during ejection of the cleaning fluid, the cleaning fluid reaches further inner parts of the complicated fins of the heat exchanger 9, so that the cleaning effect may be further enhanced.

The sequence of using the solvent "a" may be in the order of foamy cleaning agent and chemical (antibacterial agent, etc.), in the order of foamy cleaning agent, cleaning water and chemical, or in the order of non-foamy liquid cleaning agent and antibacterial agent, and after the cleaning process, the heat exchanger 9 may be dried by blowing air, warm air, hot air, or cold air from the base end opening side of the rubber hose 13.

In particular, when the solvent "a" ejected from the nozzle 11 is set as foamy cleaning fluid, if the dimension of the nozzle 11 is relatively short, the foamy cleaning fluid ejected from the nozzle 11 spreads over the entire front region (that is, the entire surface) of the upstream side of the heat exchanger 9 by its characteristic, and the entire heat exchanger 9 including its inner parts can be efficiently cleaned by the foamy cleaning fluid by the wind pressure from the fan 7, and therefore the nozzle 11 may be formed in a small and compact size, and the mounting of nozzles 11 on the air conditioner 1 may be facilitated.

instead of cleaning of the heat exchanger 9, to provide the heat exchanger 9 with antibacterial, deodorant, or antifungal function, the nozzle N of the filling container A containing the corresponding solvent may be inserted into the specified part of the receiving member 14, and the corresponding solvent may be fed in. To release aroma into the room by making use of the air conditioning wind, a filling container A containing perfume may be similarly operated.

Thus, since at least one solvent discharge means (nozzle 11) is disposed in the air feed passage, the air feed passage can be securely cleaned by the solvent discharged from the solvent discharge means (nozzle 11), and the indoor environment may be improved.

Moreover, since the solvent discharge means (nozzle 11) is disposed at the upstream side of the heat exchanger 9, substantially the entire surface of the fins having complicated shape of the heat exchanger 9 most heavily contaminated can be cleaned effectively.

Furthermore, as shown in the embodiment, when the receiving means (receiving member 14) communicating with the solvent discharge means (nozzle 11) and receiving solvent from the solvent source (filling container A) is mounted on the outer surface of the air conditioner 1, the solvent supply operation from the solvent source can be enhanced without spoiling the appearance of the apparatus. That is, by inserting the nozzle N of the filling container A into the guide 18 of the receiving member 14 by one-touch operation, the corresponding solvent can be ejected from the nozzle 11.

The nozzle 11 may be provided in the direction of the suction port of the centrifugal fan 7, and when the nozzle 11 is disposed at the upstream side of the fan 7, not only the heat exchanger 9 but also the fan plates of complicated shape can be treated by the corresponding solvents. The nozzles 11 may be also disposed at both upstream side of the heat exchanger 9 and upstream side of the fan 7. When releasing a perfume solvent, the nozzle 11 may be provided at any position between the suction port 3 and blow-out port 4.

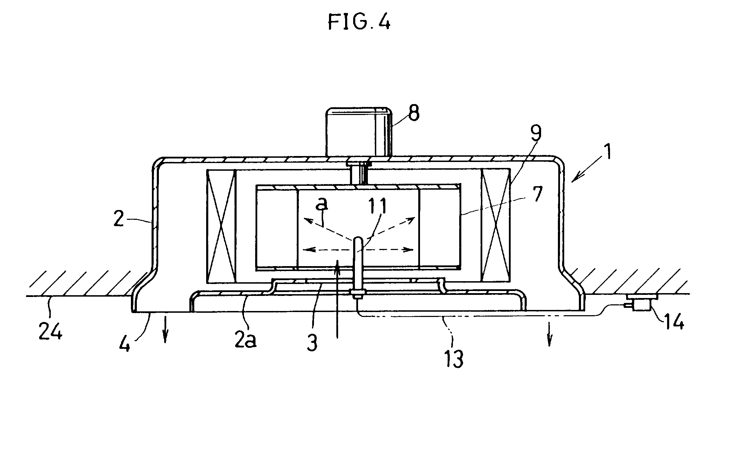

Fig. 4 through Fig. 12 show other embodiments, and in these drawings, same parts as in the foregoing drawings are identified with same reference numerals, and their detailed description is omitted, and only the different points are described below. When applied in the ceiling-buried type air conditioner 1 shown in Fig. 4, the nozzle 11 is disposed in the center of the fan 7, and the receiving member 14 is provided in the housing lower part 2a, lower side of the ceiling 24, or at another accessible position.

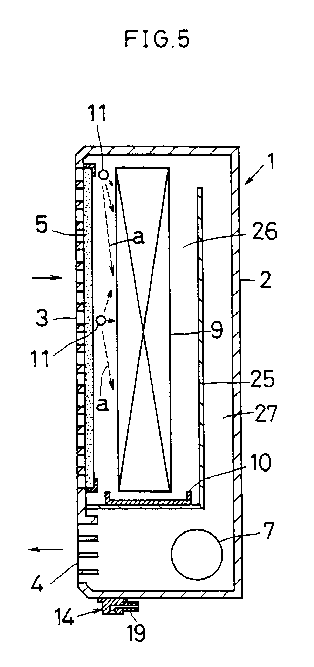

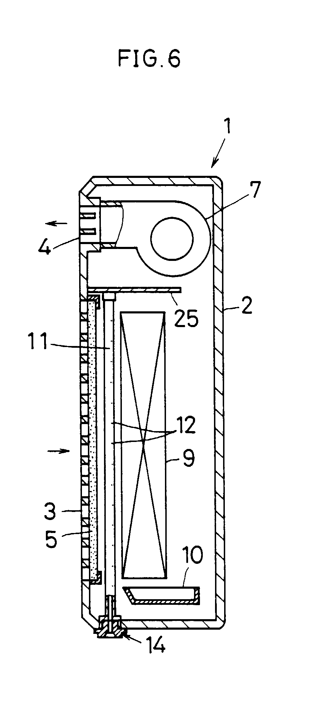

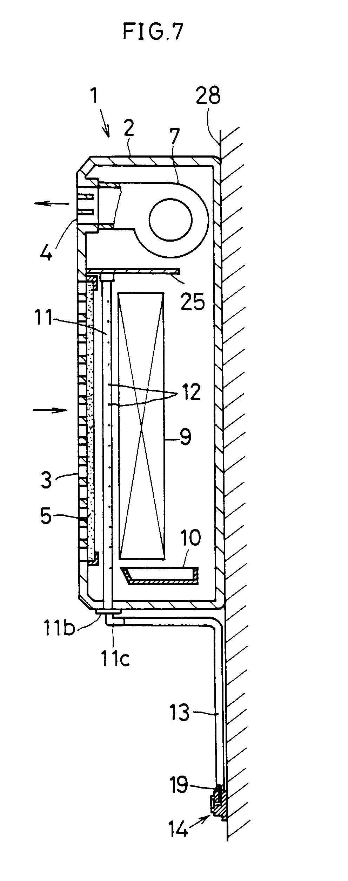

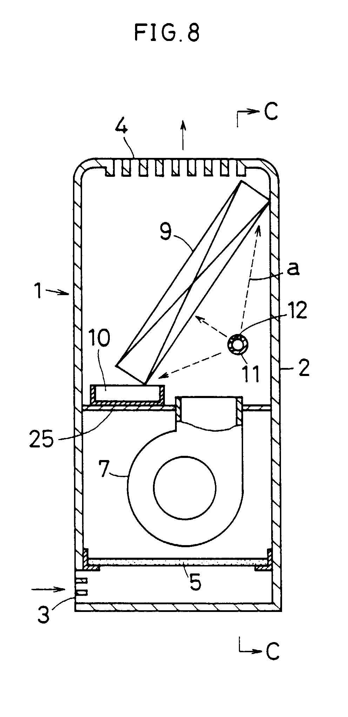

When applied in the wall-mount type air conditioner 1 shown in Fig. 5, two nozzles 11 are disposed parallel at the upstream side of the heat exchanger 9, the foamy (mousse) cleaning fluid is used in particular as the solvent, and the foamy cleaning fluid is sprayed from the upper nozzle 11 to spread over the entire surface of the heat exchanger 9, and the foamy cleaning fluid flowing downward is sucked by the fan 7 through passages 26, 27 divided by a partition member 25, and the foamy cleaning fluid after cleaning is discharged and removed from the blow-out port 4, so that the entire heat exchanger 9 and fan 7 may be cleaned satisfactorily. When applied in another model of wall-mount type air-conditioner 1 shown in Fig. 6, at least one nozzle 11 longer than the overall height of the heat exchanger 9 is disposed in the vertical direction between the upstream side of the heat exchanger 9 and the back side of the filter 5, and in the lower part of the housing 2, the base end of the nozzle 11 and the receiving member 14 are coupled liquid-tightly, so that a piping-less structure between the two members 11 and 14 may be realized. The receiving member 14 may be disposed on the indoor side wall 28 as shown in Fig. 7 so as not to spoil the appearance, and the ease of operation of the solvent feed may be enhanced. Herein, the rubber hose 13 or part of the piping may be buried in the wall 28. When applied in a stationary type air conditioner 1 as shown in Fig. 8 and Fig. 9, at least one nozzle 11 longer than the overall width of the heat exchanger 9 is disposed at the upstream side of the heat exchanger 9, and at the side surface of the housing 2, the base end of the nozzle 11 and the receiving member 14 are coupled liquid-tightly, and a piping-less structure between the two members 11 and 14 may be realized, while the leading end of the nozzle 11 is stably supported by a holder 29.

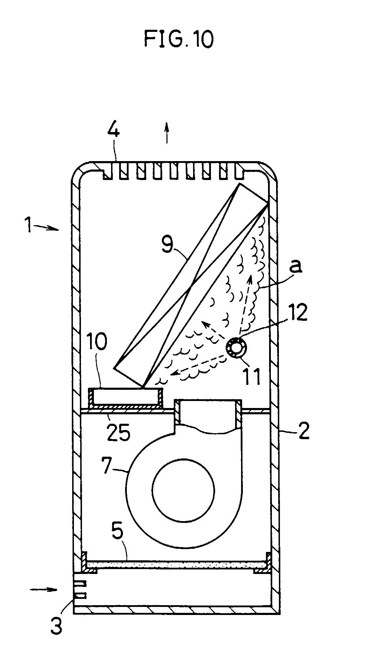

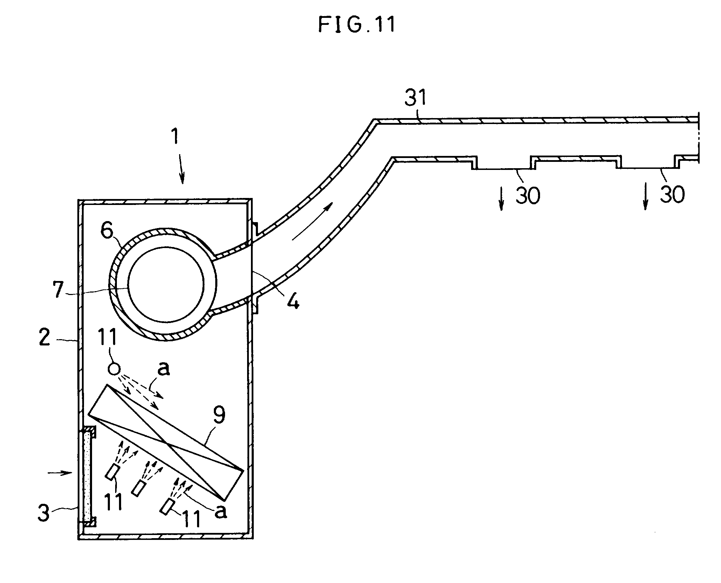

In particular, as shown in Fig. 10, when the solvent "a" ejected from the nozzle 11 is set as foamy cleaning fluid, if the nozzle 11 is small and compact, the foamy cleaning fluid ejected from the nozzle 11 spreads over the entire surface of the heat exchanger 9 by its characteristic, so that inner parts can be effectively cleaned. As shown in Fig. 11, when applied in a box type air conditioner 1 having blow-out ports 30, 30 and air feed duct 31, plural nozzles 11 are disposed at the upstream side of the heat exchanger, and one nozzle 11 is disposed at the downstream side of the heat exchanger 9, at its slope upper end side, and these nozzles 11 are formed to communicate with the receiving member 14 (not shown).

When ejecting the solvent from the nozzles 11 disposed at the upstream side of the heat exchanger 9, it is same as in the foregoing embodiments, but when the nozzle 11 at the slope upper end side of the heat exchanger 9 is used, the fan 7 is stopped, and the foamy cleaning fluid is ejected from this nozzle 11.

Since the foamy cleaning fluid flows sequentially downward along the slope angle of the heat exchanger 9, the entire heat exchanger 9 can be cleaned sufficiently.

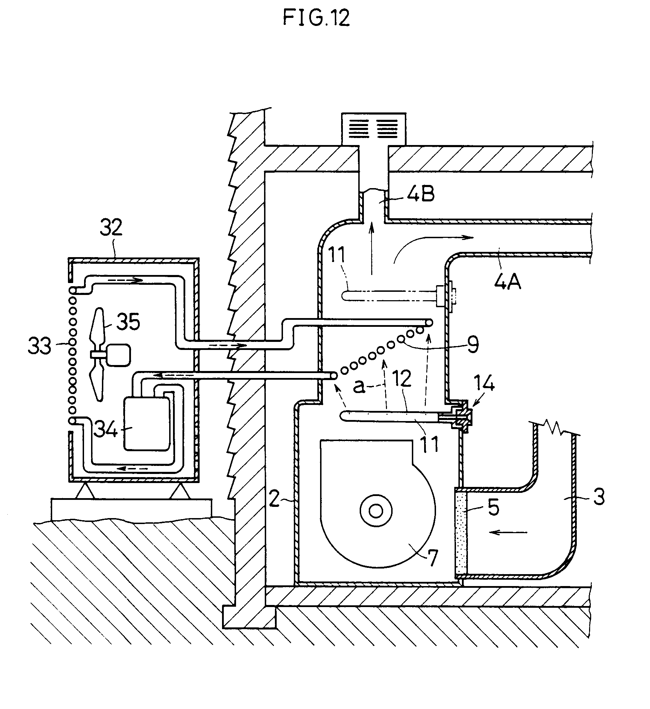

When applied in a central air conditioning system as shown in Fig. 12, the nozzle 11 is horizontally laid at the upstream side of the heat exchanger 9 of the indoor side unit, and the nozzle 11 is directly coupled to the receiving member 14. The heat exchanger 9 is properly cleaned almost entirely by the cleaning solvent ejected from the ejection ports 12 of the nozzle 11 when driving the fan 7, and when using a perfume solvent, the aroma is released into the room through ducts 4A, 4B as air blow-out ports.

Besides, at upstream positions of ducts 4A, 4B... distributing and supplying the air conditioning air into each room, nozzles 11... are disposed as indicated by virtual line in Fig. 12, and are used for cleaning the ducts, so that a favorable cleaning effect is obtained if the duct is long. Reference numeral 32 in Fig. 12 is an outdoor unit comprising an outdoor side heat exchanger 33, a compressor 34, and a fan 35.

The embodiments in Fig. 4 through Fig. 14 have nearly the same effects and actions as the foregoing embodiment.

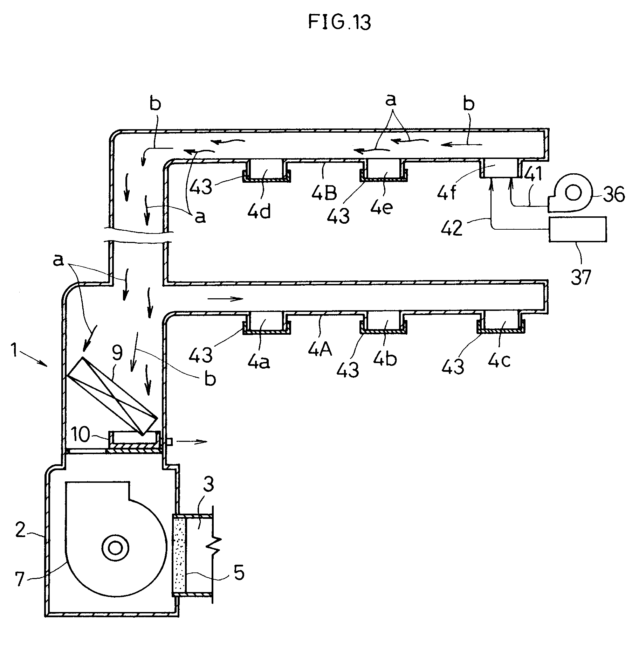

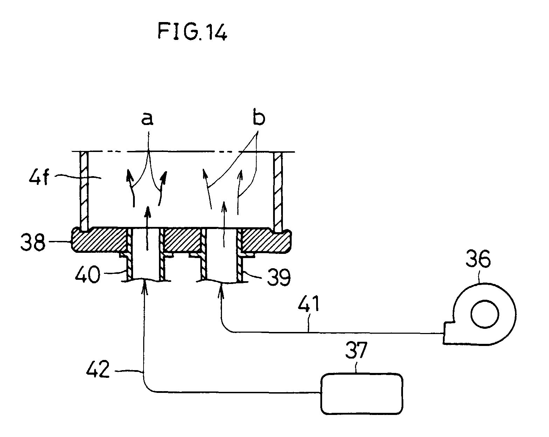

Fig. 13 and Fig. 14 show a further different embodiment of the air feed passage cleaning apparatus, which comprises a duct 4A having plural blow-out ports 4a, 4b, 4c, and a duct 4B having blow-out ports 4d, 4e, 4f. Same parts as in the foregoing embodiments are identified with same reference numerals.

It further comprises, as shown in Fig. 13 and Fig. 14, a draft fan 36 as draft means for sending air "b", which may be compressed, and a solvent source 37 for feeding solvent "a" (mainly cleaning solvent) by making use of the wind by the draft fan 36.

A seal member 38 is detachably fitted to an arbitrary blow-out port out of the plural blow-out ports 4a to 4f (preferably the blow-out port positioned as remote as possible from the heat exchanger 9) or the blow-out port 4f at the remotest position from the heat exchanger 9, and two joint pipes 39, 40 are disposed in this seal member 38.

One joint pipe 39 is connected to the discharge port of the draft fan 36 through a draft line 41, while the other joint pipe 40 is connected to the solvent source 37 through a solvent line 42.

Herein, the solvent source 37 may be of filling container type for discharging the solvent by the pressure of the sealed gas, and if the solvent discharging force is insufficient by the wind of the draft fan 36 alone, a pump for forcing out the solvent may be used at the same time.

When supplying air "b" and cleaning solvent "a" from a specific blow-out port (for example, blow-out port 4f), a blocking member 43 for blocking the other blow-out ports 4a to 4e is provided detachably so as to block air-tightly. As the blocking member 43, a lid, plug, sheet, tape, packing, or other various members may be used. Such blocking member 43 blocks the blow-out ports 4a to 4e, corresponding to the structure of the blow-out ports 4a to 4e.

When cleaning the ducts 4A, 4B and heat exchanger 9 by using thus constituted air feed passage cleaning apparatus, first the fan 7 is stopped, then the other blow-out ports 4a to 4e are closed by the blocking member 43.

Then, as shown in Fig. 13 and Fig. 14, the seal member 38 is attached to a specific blow-out port (for example, blow-out port 4f), and the cleaning solvent "a" is supplied, together with compressed air "b", from the two joint pipes 39, 40 to the heat exchanger 9 through the duct 4B and heat exchanger downstream side chamber as indicated by arrows in Fig. 13.

That is, the cleaning solvent "a" is supplied in the reverse direction of the ordinary flow direction of the air conditioning wind. In this case, since the ducts 4A and 4B communicate with each other, the cleaning solvent "a" is supplied also to the duct 4A side.

In this way, when the cleaning solvent "a" is supplied from a specific blow-out port (for example, the blow-out port 4f at the position remotest from the heat exchanger 9) to the heat exchanger 9 side, the inside of the ducts 4B, 4A and the heat exchanger 9 can be cleaned by this cleaning solvent "a", and the waste liquid after cleaning is discharged outside of the housing 2 from the drain pan 10 through the drain pipe.

In particular, when a foamy cleaning solvent "a" is used, the foamy cleaning fluid is supplied into the heat exchanger 9 side by the compressed air "b" while expanding in the entire region in the ducts 4B, 4A owing to its characteristic, and a high cleaning effect is assured, but the cleaning solvent "a" is not limited to this.

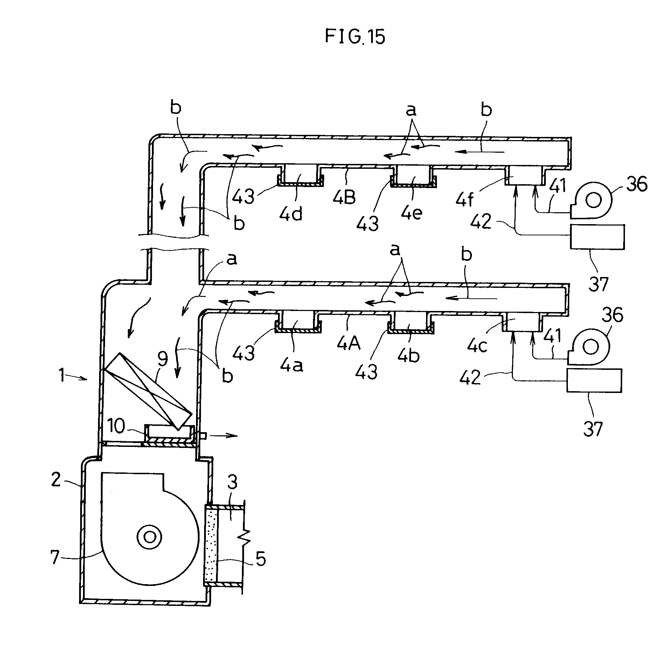

Incidentally, as shown in Fig. 13, in the duct 4B corresponding to one air conditioning area, after supplying the cleaning solvent "a" together with the compressed air "b" to the blow-out port 4f at the remotest position from the heat exchanger 9, in the duct 4A corresponding to the other air conditioning area, the cleaning solvent "a" may be supplied together with the compressed air "b" in the same manner from the blow-out port 4c, or, as shown in Fig. 15, in the ducts 4A, 4B of the air conditioning areas, by supplying the cleaning solvent "a" together with the compressed air "b" into both blow-out ports 4c, 4f positioned at long distance from the heat exchanger 9, it may be constituted to enhance the cleaning efficiency of the ducts 4A, 4B, and shorten the cleaning time.

After cleaning, by feeding compressed air "'b" only from the draft fan 36, the inside of the ducts 4A, 4B may be dried.

According to the air feed passage cleaning apparatus as mentioned above, since the cleaning solvent "a" is supplied together with the compressed air "b" into the heat exchanger 9 side through the ducts 4A, 4B by the draft fan 36 and solvent source 37, the ducts 4A, 4B and the heat exchanger 9 can be cleaned securely by the cleaning solvent "a" supplied by the air "b".

Therefore, when air conditioning operation is started after cleaning, an offensive smell is not generated, and the indoor environment may be enhanced.

Moreover, the cleaning operation is enhanced by supplying the cleaning solvent "a" together with the compressed air "b" from an arbitrary blow-out port out of the blow-out ports 4a to 4f by the draft fan 36 and solvent source 37. In particular, it is effective where the feeding job from the blow-out ports 4c, 4f is complicated due to indoor structures or the like positioned beneath the blow-out ports 4c, 4f.

By supplying the cleaning solvent "a" together with the compressed air "b" from the remotest blow-out port 4f from the heat exchanger 9 out of the blow-out ports 4a to 4f by the draft fan 36 and solvent source 37, if the air feed passage of the ducts 4A, 4B is long, the entire region and the heat exchanger 9 can be securely cleaned.

When supplying the air "b" and cleaning solvent "a" from a specific blow-out port (for example, blow-out port 4f), since the blow-out ports 4a to 4e are closed by the blocking member 43, the fluid after cleaning is prevented from flowing out through the blow-out ports 4a to 4e, and escape of air "b" through the blow-out ports 4a to 4e is also prevented, so that the air "b" and cleaning solvent "a" can be favorably guided to the heat exchanger 9 side, and the cleaning efficiency is enhanced.

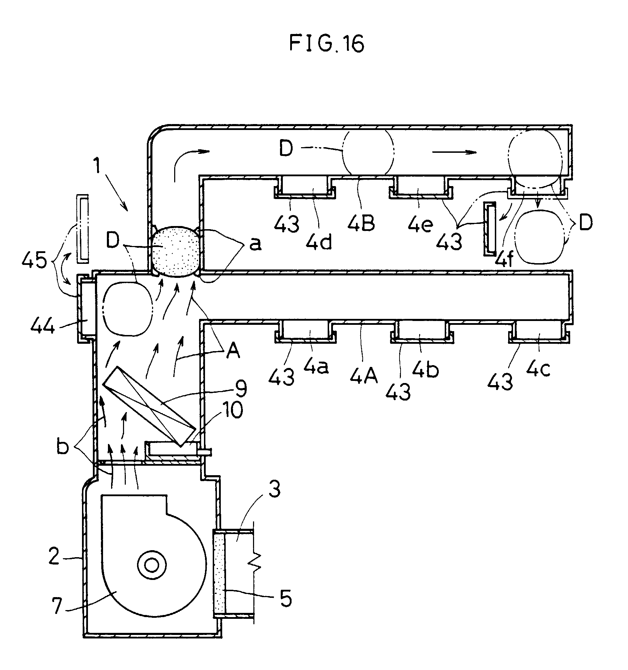

Fig. 16 shows a further different embodiment of the air feed passage cleaning apparatus, which comprises a cleaning and wiping element D (hereinafter called wiping element D) provided in the ducts 4A, 4B, and a fan 7 for sending compressed air "b" for moving the wiping element D toward a specific blow-out port (for example, blow-out port 4f).

The wiping element D is composed of a flexible and elastic member such as sponge, and is formed in a size and shape so that an almost entire peripheral surface may contact with the inner wall of the ducts 4A, 4B. Instead of the wiping element D, a brush planting multiple bristles, a nonwoven fabric made of fibers, or a cotton interweave by interweaving cotton material may be used.

When cleaning, after stopping the fan 7, the blow-out ports 4a to 4e except blow-out port 4f are closed by the blocking member 43, and the lid 45 of the port 44 formed in the heat exchanger downstream side chamber is released, and the wiping element D soaked with solvent is loaded into the duct 4B.

After closing the port 44 by the lid 45, the fan 7 is driven, and by applying a transfer pressure of the air "b" sufficiently to the wiping element D, the wiping element D is moved at once toward the blow-out port 4f side, and the dirt in the duct 4B is quickly and cleanly removed by the synergistic effects of the cleaning solvent "a" and the wiping element D in a short time, so that sanitary environments may be obtained.

By repeating the job several times, the residual dirt can be cleaned and removed completely. Therefore, the working time can be shortened substantially and the working efficiency is enhanced at the same time.

Recovering the cleaning solvent "a" discharged from the blow-out port 4f and the wiping element D, the wiping element D is cleaned in water or solvent, and used again. The cleaning operation may be done while feeding the cleaning solvent "a" into the duct 4B, or by dismounting the heat exchanger 9, the inside of the duct 4B may be cleaned.

When cleaning the duct 4A, by releasing the blow-out port 4c, other blow-out ports 4a, 4b, 4d, 4e are closed, and cleaning operation is done the same as above.

Using two wiping elements D, D, the ducts 4A, 4B may be cleaned simultaneously, and the working time is shortened and the working efficiency is enhanced.

Besides, by laying down cover, sheet or other protective member (not shown) beneath or around a specific blow-out port, the cleaning work can be done cleanly and hygienically.

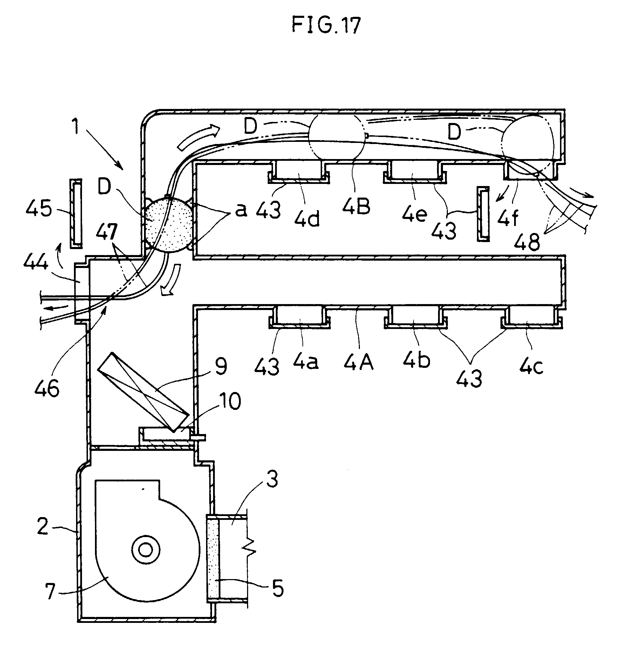

Fig. 17 shows a different embodiment of air feed passage cleaning apparatus, which is intended to clean and remove dirt inside the ducts 4A, 4B by towing and operating a linear towing member 46 linked to the wiping element D.

The towing member 46 couples and fixes a flexible towing wire 47 and a towing rope 48 (hereinafter called rope 48), and the wiping element D is fixed to the leading end of the wire 47, and the wire 47 and rope 48 are formed in a length longer than the distance connecting the blow-out port 4f and port 44. Instead of the wire 47, a rope or chain may be used.

When cleaning, the fan 7 is stopped, all the blow-out ports 4a to 4e except the blow-out port 4f are closed, the rope 48 is inserted into the duct 4B from the port 44 side, and the wire 47 pulled out to the port 44 side and the rope 48 pulled out to the blow-out port 4f side are pulled alternately by hand and manipulated, so that the dirt in the duct 4B can be cleaned and removed by the synergistic actions of the cleaning solvent "a" and wiping element D.

Depending on the position and area of dirt, the wiping position by the wiping element D can be changed. Besides, the cleaning may be done while feeding the cleaning solvent "a" into the duct 4B.

Moreover, the rope 48 may be connected to the wiping element D or wire 47 projecting to the blow-out port 4f side through a connector or the like, or the wire 47 and rope 48 may be pulled mechanically by winch or other towing means.

After pulling out the rope 48 to the blow-out port 4c side of the duct 4A , or to the side of blow-out ports 4a, 4b of the duct 4A, or blow-out ports 4d, 4e of the duct 4B, by towing and operating the wire 47 and rope 48, the dirt in the ducts 4A, 4B can be cleaned and removed by the wiping element D.

Without linking the rope 48, only the wire 47 may be inserted into the duct 4B, so that the dirt in the duct 4B can be cleaned and removed by the wiping element D fixed to the wire 47.

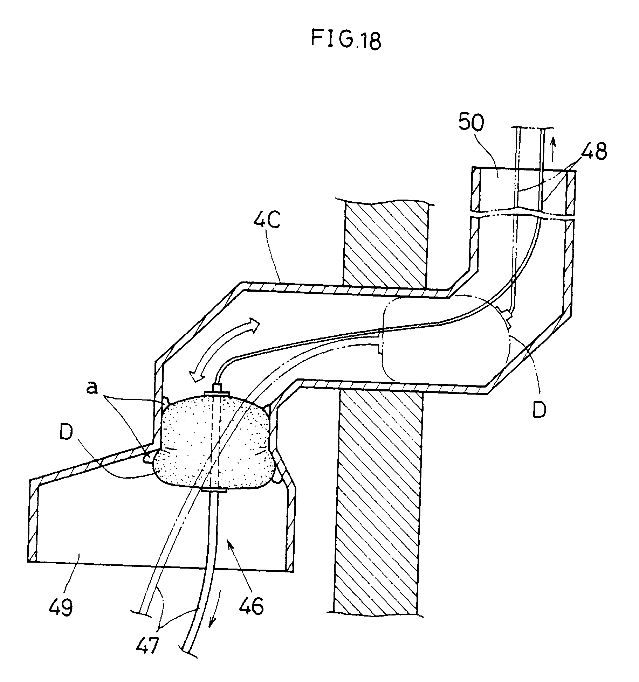

On the other hand, as shown in Fig. 18, by inserting the towing member 46 in an exhaust duct 4C piped in a kitchen or the like, and towing and operating the wire 47 pulled out to the intake 49 side and the rope 49 pulled out to the exhaust port 50 side, the dirt in the duct 4C may be cleaned and removed by the wiping element D.

Or, by loading the wiping element D into the duct 4C, the wiping element D can be moved by using the positive pressure of air "b" or the negative pressure of vacuum pump or the like, and the dirt in the duct 4C can be cleaned and removed.

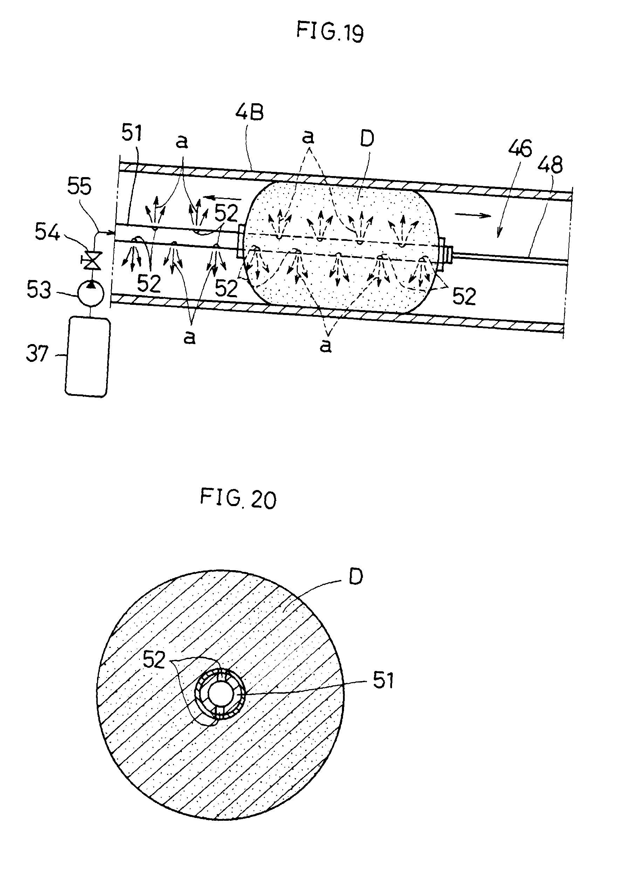

Fig. 19 and Fig. 20 show a further different embodiment of air feed passage cleaning apparatus, which is intended to clean and remove dirt by blowing the cleaning solvent "a" to the inner wall of the duct 4B.

The wiping element D is fixed to the leading end of a flexible towing pipe 51, and holes 52... for discharging the cleaning solvent "a" are formed in the periphery of the towing pipe 51 at specific intervals in the longitudinal direction, the rope 48 and towing pipe 51 are coupled, and the solvent source 37 and towing pipe 51 are connected with a feed line 55 having a pump 53 and a valve 54.

When cleaning, after inserting the towing pipe 51 and wiping element D into the duct 4B, the cleaning solvent "a" stored in the solvent source 37 is supplied into the towing pipe 51 by the pump 53, and the cleaning solvent "a" discharged from the holes 52... is sprayed into the inner wall of the duct 4B, and the dirt in the duct 4B is cleaned and removed by the wiping element D, and therefore a proper quantity of solvent suited to cleaning is stably obtained, and the cleaning job can be done efficiently.

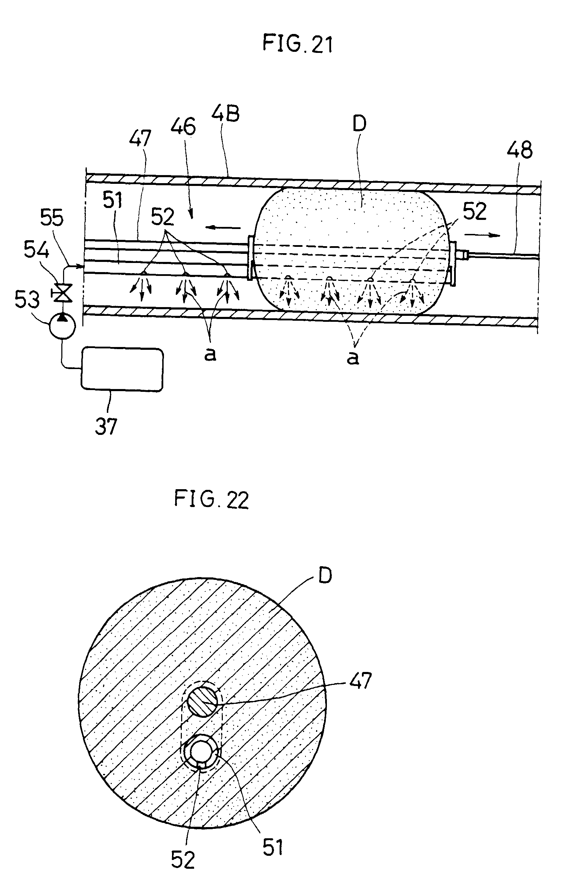

Fig. 21 and Fig. 22 show a further different embodiment of air feed passage cleaning apparatus, in which the towing pipe 51 is installed along the wire 47, and the cleaning solvent "a" discharged from the holes 52... of the towing pipe 51 is sprayed to the inner wall of the duct 4B, so that the dirt is cleaned and removed by the wiping element D.

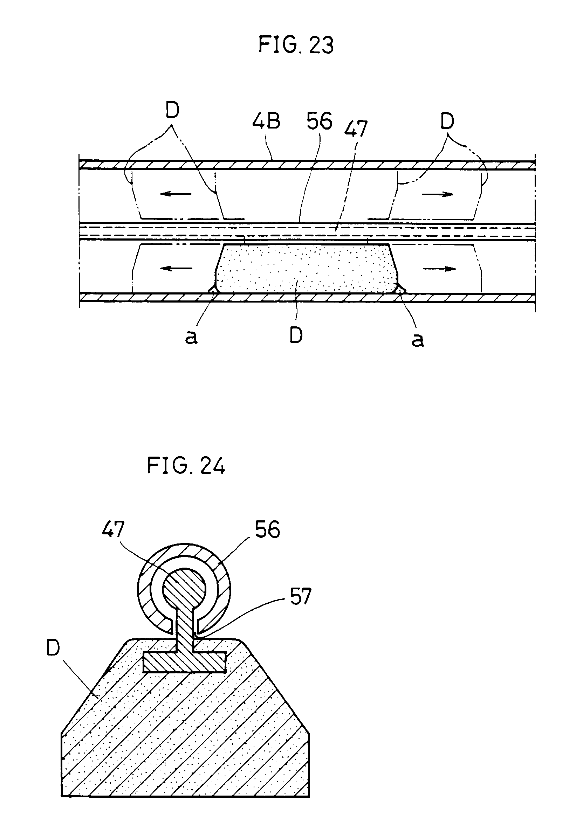

Fig. 23 and Fig. 24 show a further different embodiment of air feed passage cleaning apparatus, in which the wire 47 is towed and manipulated along a wire guide 56 (hereinafter called guide 56), and the dirt in the duct 4B is cleaned and removed by the sector or trapezoidal wiping element D coupled to the wire 47.

The wire 47 is inserted into the flexible guide 56, and the wire 47 and wiping element D are integrally coupled with a guide groove 57 formed in the side of the guide 56.

After inserting the guide 56 in the duct 4B, the wire 47 is towed and manipulated, and when the wiping element D soaked with solvent is moved along the guide 56, the dirt in the duct 4B can be wiped off, cleaned and removed accurately, and dislocation of the wiping position is prevented securely.

At the same time, contact between the duct 4B and wire 47 is avoided, and breakage or flaw of the duct 4B can be prevented securely. The cleaning job may be also done while feeding cleaning solvent "a" into the duct 4B.

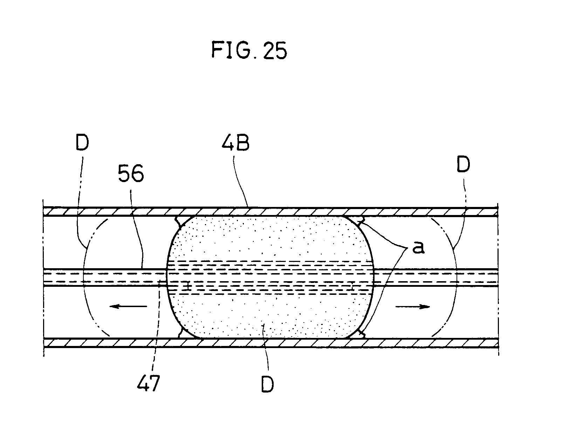

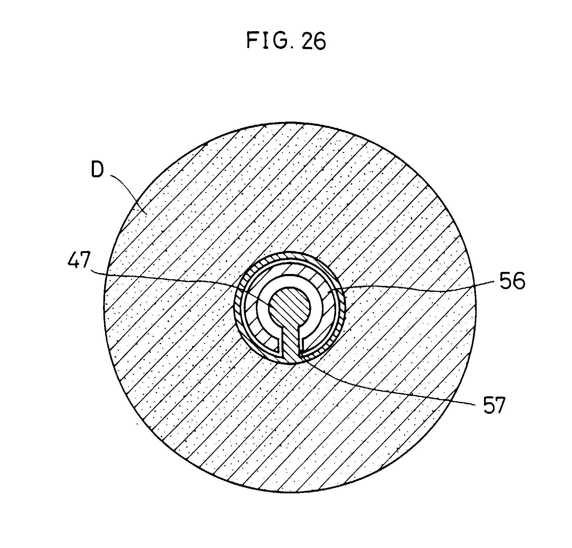

Fig. 25 and Fig. 26 show a further different embodiment of air feed passage cleaning apparatus, in which the wire 47 inserted into the guide 56 and a tubular wiping element D freely fitted to the outer circumference of the guide 56 are coupled, the wire 47 is towed and manipulated, and the wiping element D soaked in solvent is moved along the guide 56, and in this constitution the dirt in the duct 4B can be cleaned and removed at once, so that the working efficiency can be enhanced.

In the correspondence between the constitution of the invention and the foregoing embodiments,
the air suction section of the invention corresponds to the air suction port 3 of the embodiment, and similarly,
the air blow-out section, to the air blow-out port 4, ducts 4A, 4B,
the solvent discharge means, to the nozzle 11,
the feed means, to the draft fan 36, solvent source 37,
the moving means, to the fan 7, towing member 46, and
the air pressure feed means, to the fan 7,
   but it must be noted that the invention is not limited to the illustrated embodiments alone.

## Claims

1. Air feed passage cleaning apparatus comprising at least one solvent discharge means (11) disposed in an air feed passage between an air suction section (3) and an air blow-out section (4), wherein solvent (a) is dischargeable from the solvent discharge means (11).

2. An air feed passage cleaning apparatus of claim 1, wherein the solvent discharge means (11) is disposed at the upstream side of a heat exchanger (9) in the air feed passage.

3. An air feed passage cleaning apparatus, used in an air feed device comprising a heat exchanger (9) and at least one blow-out port (4a to 4f) blowing out air conditioning wind exchanged in heat by the heat exchanger (9), wherein feed means (36,37) is provided for feeding cleaning solvent (a), together with pressurised air (b), to the heat exchanger (9) from a blow-out port (4f) through an air feed passage.

4. An air feed passage cleaning apparatus of claim 3, used in an air feed device comprising plural blow-out ports (4a to 4f), wherein the feed means (36,37) is provided at the blow-out port (4f) at a position as remote as possible from the heat exchanger (9).

5. An air feed passage cleaning apparatus comprising a cleaning and wiping element (D) formed in a size for abutting against the inner wall of the air feed passage and arranged to be loaded in the air feed passage, and moving means (7;46) for moving the cleaning and wiping element (D) loaded in the air feed passage.

6. An air feed passage cleaning apparatus of claim 5, wherein the moving means (7;46) comprises air pressure feed means (7) for applying an air pressure in a direction of moving the cleaning and wiping element (D) towards a specific blow-out port (4f) in the air feed passage.

7. An air feed passage cleaning apparatus of claim 5, wherein the moving means (7;46) comprises a linear towing member (46) coupled to the cleaning and wiping element (D), so that the towing member (46) can be pulled to outside of the air feed passage.
